# EUROPÄISCHE PATENTANMELDUNG

(11) **EP 1 820 931 A1**
(43) Veröffentlichungstag der Anmeldung: **22.08.2007**
(21) Anmeldenummer: 07002154.8
(22) Anmeldetag: 01.02.2007
(51) Int. Cl.: E06B 5/16

(54) **Brandschutzverglasung**

(30) Priorität: 15.02.2006 DE 202006002749 U
(71) Anmelder: ARNOLD Brandschutzglas GmbH & Co. KG, 09350 Lichtenstein (LI)
(72) Erfinder: Schulz, Matthias, 09276 Oelsnitz/Erzgeb. (DE)
(74) Vertreter: Fuhlendorf, Jörn

(57) **Zusammenfassung**

Eine Brandschutzverglasung (10) besitzt mindestens zwei transparente Brandschutz-Glasplatteneinheiten (11-13), die an Seitenkanten (16-19) mittelbar aneinander stoßen und deren übrige Seitenkanten an einem Bauteil (14) gehalten sind, wobei jede Brandschutz-Glasplatteneinheit (11-13) aus auf Abstand gehaltenen, parallelen Glasscheiben (26, 27) aufgebaut ist, zwischen denen ein Brandschutzmittel (37) angeordnet ist, und wobei zwischen den über eine Stoßfuge (21) von mindestens 2 mm einander gegenüberliegenden Seitenkanten (16-19) der Brandschutz-Glasplatteneinheiten (11-13) eine feuerhemmende Isoliermaterialanordnung (42) eingebracht ist. Zur Schaffung einer Brandschutzverglasung (10), die weniger Glasscheiben benötigt, einfacher aufzubauen ist und in der Stoßfuge eine höhere Sicherheit gegen Durchtritt von Feuer und Rauch bietet, ist vorgesehen, dass jede Brandschutz-Glasplatteneinheit (11-13) aus zwei nach Art einer Isolierglasscheibenanordnung mittels Abstandhalter (28) und einem PU-Randverbund (34) auf Abstand und aneinander gehaltenen ESG-Scheiben (26, 27) aufgebaut ist, deren Innenraum (36) mit einem Gel (37) als Brandschutzmittel ausgefüllt ist, und dass in einem Fugenbereich (21') zwischen denjenigen Randbereichen, die sich zwischen den beiden ESG-Scheiben (26, 27) befinden, als Isoliermaterialanordnung feuerhemmendes keramisches Isolierband (42) eingelegt und in Fugenbereiche (21") zwischen den ESG-Scheiben (26, 27) jeweils eine feuerhemmende Silikonmasse (43) eingebracht ist.

## Beschreibung

Die vorliegende Erfindung bezieht sich auf eine Brandschutzverglasung nach dem Oberbegriff des Anspruchs 1.

Bei einer derartigen aus der EP 1 194 673 B1 bekannten Brandschutzverglasung werden Brandschutz-Glasplatteneinheiten verwendet, die aus vier Floatglasscheiben mit dazwischen angeordneten Brandschutzschichten aus einer wasserhaltigen Alkalimetallsilikatmasse aufgebaut sind. Die Brandschutzschichten sind glasrandseitig mit einer Nut versehen, in die ein Sperrmaterial zur feuchtigkeits- und luftdichten Abdichtung des verwendeten Brandschutzmittels ausgefüllt sind. In der Stoßfuge zwischen den einander gegenüberliegenden Seitenkanten der Brandschutz-Glasplatteneinheiten ist ein Zusatzelement in Form von Holz, einem Elastomer oder einem vorgeformten Silikonkautschukband eingebracht, das diese Stoßfuge gegen Durchtritt von Feuer und Rauch abdichten soll.

Für diesen Aufbau der Brandschutzverglasung werden zwar relativ kostengünstige Gläser verwendet, jedoch bestehen diese Anordnungen aus einer Vielzahl von Glasscheiben und entsprechend einer Vielzahl von dazwischen angeordneten Brandschutzmittelschichten, die randseitig zur Stoßfuge hin mit einer mit einem Sperrmaterial auszufüllenden Nut versehen sein oder versehen werden müssen. Dies bedeutet, dass entweder ein während des Aufbaus der Glasplatteneinheit vorgesehener Platzhalter für die Nut wieder entfernt oder nachträglich eine Nut mechanisch eingearbeitet werden muss.

Aufgabe der vorliegenden Erfindung ist es, eine zur Brandschutzverglasung der eingangs genannten Art alternative Brandschutzverglasung zu schaffen, die weniger Glasscheiben benötigt, einfacher aufzubauen ist und in der Stoßfuge eine höhere Sicherheit gegen Durchtritt von Feuer und Rauch bietet.

Zur Lösung dieser Aufgabe sind bei einer Brandschutzverglasung der genannten Art die im Anspruch 1 angegebenen Merkmale vorgesehen.

Durch die erfindungsgemäßen Maßnahmen ist durch die Verwendung höherwertiger Gläser erreicht, dass im Brandfall keinerlei Splitterabgang in den zu schützenden Bereich vorkommt und dass eine höhere Luftschalldämmung erreicht ist. Des Weiteren können auf Grund des robusten Glases größere Glasmaße verwirklicht werden. Durch die Verwendung des keramischen Isolierbandes ist auf Grund dessen hoher Isolation im Brandfalle eine höhere und länger andauernde Sicherheit gegen Durchtritt von Feuer und Rauch in den Stoßfugen gewährleistet.

Mit den Merkmalen gemäß Anspruch 2 ist erreicht, dass die einzubringende Silikonmasse mit dem vorgesehenen PU-Randverbund nicht in Berührung kommt, so dass diese beiden unterschiedlichen Kunststoffmaterialien keine Reaktion zeigen können.

Mit den Merkmalen nach Anspruch 3 und gegebenenfalls denen nach Anspruch 4 ist erreicht, dass an beiden aneinander zu bringenden Brandschutz-Glasplatteneinheiten die keramischen Isolierbänder von vorn herein aufgebracht werden können, was die Montage einer Brandschutzverglasung erleichtert. Dabei werden nach den Merkmalen des Anspruchs 5 bei der Montage die beiden keramischen Isolierbänder mechanisch um etwa ein Drittel ihrer Dicke zusammengedrückt, was automatisch zu einer entsprechenden Dichtigkeit der Stoßfuge für den Normalbetriebsfall führt.

Mit den Merkmalen des Anspruchs 6 ist eine einfache Fertigstellung der Brandschutzverglasung auch in optischer Weise erreicht.

Gemäß einem weiteren Ausführungsbeispiel vorliegender Erfindung sind die Merkmale nach Anspruch 7 vorgesehen, was zu dem wesentlichen Vorteil führt, dass die in den Stoßfugen vorhandenen Materialien vor UV-Strahlung geschützt sind, so dass ihre Qualität für den Brandschutzfall auch über eine sehr lange Zeitdauer erhalten bleibt. Dabei ist es zweckmäßig, die Merkmale nach Anspruch 8 und/oder 9 vorzusehen. Im ersteren Falle ergibt sich ein einfaches Auftragen des Abdeckstreifens, was praktisch nur bei ESG-Gläsern möglich ist. Im zweiten Falle bietet sich ein UV-Strahlenschutz für jegliche vorkommende Sonneneinstrahlwinkel.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: in schematischer Vorderansicht eine Brandschutzverglasung gemäß einem bevorzugten Ausführungsbeispiel vorliegender Erfindung und
- Figur 2: in vergrößerter Darstellung einen Teilschnitt längs der Linie II-II der Figur 1.

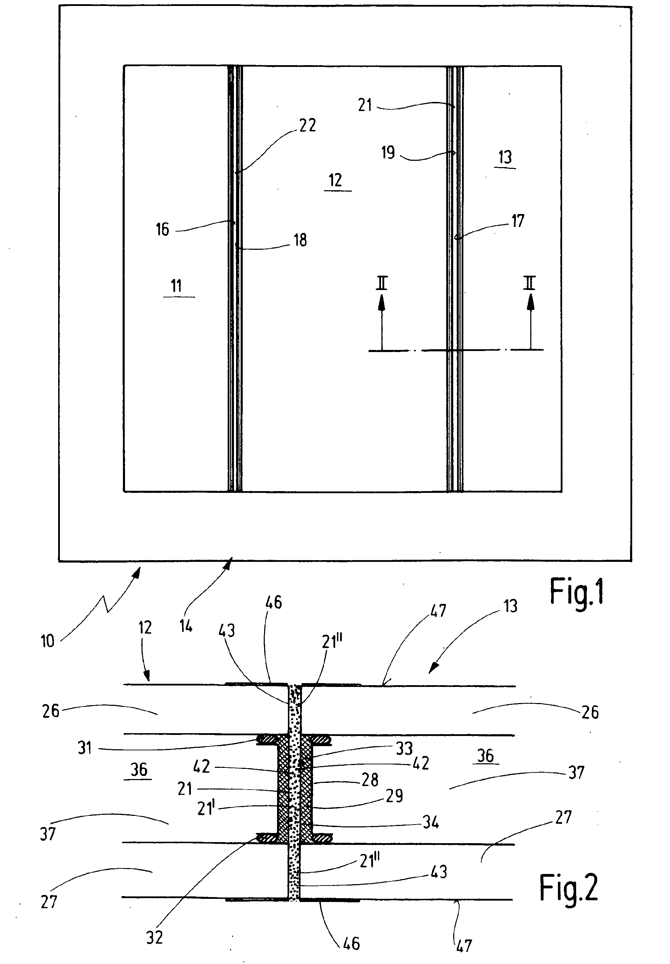

Die in Figur 1 dargestellte Brandschutzverglasung 10 ist beispielsweise aus drei Brandschutz-Glasplatteneinheiten 11, 12, 13 aufgebaut, die mittels eines umlaufenden Rahmens 14 mittelbar innerhalb einer Wandausnehmung oder unmittelbar gehalten sind. Da eine Seite des Rahmens nicht verschraubt ist, kann ein endlos langes Lichtband hergestellt werden. Dabei sind die Glasplatteneinheiten 11, 12 und 13 in gleicher Art und Weise ausgebildet, wobei die beiden seitlichen Glasplatteneinheiten 11 und 13 schmaler als die mittige Glasplatteneinheit 12 sind, während sie jeweils gleiches Höhenmaß besitzen. Die Glasplatteneinheit 11 sowie die Glasplatteneinheit 13 stoßen an ihren Längsrändern 16 beziehungsweise 17 an die Längsränder 18 und 19 der Glasplatteneinheit 12 mittelbar an, wobei, wie noch ausgeführt werden wird, eine in montiertem Zustand jeweils feuer- und rauchdicht ausgefüllte Stoßfuge 21 beziehungsweise 22 besteht. Die übrigen Längs- und Querränder der Glasplatteneinheiten 11, 12 und 13 sind im Rahmen 14 oder unmittelbar in einer Wandausnehmung gehalten und fixiert.

Da die Glasplatteneinheiten 11, 12 und 13 identisch aufgebaut sind, wird zunächst nur auf die Glasplatteneinheit 12 in Figur 2 Bezug genommen wird. Die Glasplatteneinheit 12 ist ähnlich einer Isolierglasscheibenanordnung aufgebaut, das heißt, sie besteht aus zwei parallel zueinander angeordneten ESG-Scheiben 26 und 27, zwischen denen randumlaufend ein Abstandhalter 28 aus Glasfaserkunststoff angeordnet ist. Der etwa U-förmige Abstandhalter 28 ist in üblicher Weise gegenüber den Stirnrändern der ESG-Scheiben 26, 27 zurückgesetzt und hält mit Hilfe von Butylschnüren 31, 32 die beiden ESG-Scheiben 26, 27 vorab zusammen. Die Butylschnüre 31 und 32 erstrecken sich ebenfalls in bekannter Weise zwischen den betreffenden Innenflächenbereichen der ESG-Scheibe 26, 27 und dem parallel dazu angeordneten Steg des Abstandhalters 28. Zum endgültigen Fixieren und Zusammenhalten des Verbundes aus den ESG-Scheiben 26 und 27 und den umlaufenden Abstandhalter 28 mit den Butylschnüren 31, 32 ist der Spalt 33 zwischen der äußeren Abstandhalterfläche 29 und der Verbindungslinie der Stirnränder der ESG-Scheiben 26 und 27 mit einem PU-Randverbund 34 ausgefüllt, der dem endgültigen Zusammenhalten der ESG-Scheiben 26 und 27 dient.

Auf diese Weise ist zwischen den beiden ESG-Scheiben 26 und 27 ein Innenraum 36 entstanden, der mit einem Brandschutzmittel 37 ausgefüllt ist. Als Brandschutzmittel wird ein Gel verwendet, das aus Wasser, einem Salz und einem Polymerbildner sowie einem Katalysator, beispielsweise Peroxid, als Starter für die Polymerisation zusammengesetzt ist. Das Einbringen des Gels in den Innenraum 36 erfolgt in noch flüssigem Zustand in der Weise, dass durch eine nicht dargestellte erste Öffnung im Abstandhalter 28 das Gel in den Innenraum 36 eingedrückt wird, wobei durch eine zweite beispielsweise diagonal gegenüberliegende Öffnung im Abstandhalter 28 die im Innenraum 36 vorhandene Luft herausgedrückt wird. Der Innenraum 36 wird mit dem flüssigen Gel vollständig ausgefüllt, wonach die Polymerisation beginnt, die bewirkt, dass das Brandschutzmittel 37 als feste gelbeziehungsweise gallertartige Masse auspolymerisiert wird.

Beim in Figur 2 dargestellten Ausführungsbeispiel sind die ESG-Scheiben 26 und 27 gleich dick, beispielsweise 8 mm, während der Innenraum 36, der mit dem Brandschutzmittel 37 ausgefüllt ist, eine lichte Weite von beispielsweise 15 mm aufweist. Es versteht sich, dass je nach Brandschutzklasse die ESG-Scheiben 26 und 27 dicker und/oder der mit dem Brandschutzmittel 37 ausgefüllte Innenraum 36 größer gemacht werden können.

Gemäß der zeichnerischen Darstellung werden die Glasplatteneinheiten 11 und 12 sowie 12 und 13 unter Bildung der Stoßfuge 22 beziehungsweise 21 aneinandergesetzt. Hierzu werden zunächst die Längsränder 18 und 17 beider Glasplatteneinheiten 12 und 13 über ihre gesamte Länge und zumindest in einem Fugenbereich 21' zwischen den Kanten der ESG-Scheiben 26 und 27 also am PU-Randverbund 34 mit einem keramischen Isolierband 42 bestückt. Das keramische Isolierband 42 isoliert im Brandfall thermisch, das heißt bei hoher Temperatur wird der Wärmeübergang unterbrochen; außerdem ist es rückseitig selbstklebend. Mit anderen Worten, auf den PU-Randverbund 34 jeder Glasplatteneinheit 12, 13 wird ein Streifen des keramischen Isolierbandes 42 vor der Montage aufgeklebt. Beispielsweise besitzt das keramische Isolierband 42 eine Dicke von etwa 3 mm. Bevorzugt besitzt der Blähpapierstreifen 42 eine Breite von etwa hier 20 mm, so dass der Streifen des keramischen Isolierbandes 42 zu beiden Seiten über den PU-Randverbund 34 in die Fugenbereiche 21" der ESG-Scheiben 26 und 27 ragt.

Mit dem Aneinandersetzen beispielsweise der breiten Glasplatteneinheit 12 an eine der schmalen Glasplatteneinheiten 13, 11 oder umgekehrt, werden die beiden keramischen Isolierbänder 42 so weit zusammengedrückt, bis eine Stoßfuge 21 zwischen den beiden Längsrändern 18 und 17 von etwa 4 mm besteht. Dies bedeutet, dass beide keramische Isolierbänder 42 um etwa ein Drittel zusammengedrückt sind und damit in diesem Bereich eine gas- beziehungsweise rauch- und feuerdichte Stoßfuge 41 bewirken.

Danach wird der zwischen den ESG-Scheiben 26 und 27 verbleibende Teil des Fugenbereichs 21" der Stoßfuge 21 mit einer Silikon-Dichtungsmasse 43 ausgespritzt beziehungsweise ausgefüllt, die einem bestimmten Temperaturbereich standhält und damit das Eindringen von Rauch und Flammen durch diesen Stoßfugenbereich 41" hindurch zumindest eine gewisse Zeit hindert. Die Silikon-Dichtungsmasse 43 erstreckt sich beim dargestellten Ausführungsbeispiel bis zu den keramischen Isolierbändern 42, ohne den PU-Randverbund 34 zu berühren.

An den Fugenbereich 21" der Stoßfuge 21 angrenzend sind die Außenflächen 47 der ESG-Scheiben 26 und 27 in einem schmalen Bereich von beispielsweise etwa 15 bis 20 mm mit einem Siebdruckstreifen 46 versehen, der aus einem UV-undurchlässigen Material, vorzugsweise Keramik besteht. Dieser vorzugsweise dunkle Siebdruckstreifen 46 ist im Siebdruck auf die ESG-Scheibe 26, 27 aufgebracht. Dadurch wird verhindert, dass die Butylschnur 31, 32 und der PU-Randverbund 34 UV-Strahlung ausgesetzt sind, und zwar im Wesentlichen unabhängig vom Sonneneinstrahlwinkel. Es kann auch ausreichend sein kann, den Siebdruckstreifen 46 nur auf die Außenflächen 47 der gebäudeaußenseitigen ESG-Scheiben 26 oder 27 aufzubringen.

## Patentansprüche

1. Brandschutzverglasung (10), mit mindestens zwei transparenten Brandschutz-Glasplatteneinheiten (11-13), die an Seitenkanten (16-19) mittelbar aneinander stoßen und deren übrige Seitenkanten an einem Bauteil (14) gehalten sind, wobei jede Brandschutz-Glasplatteneinheit (11-13) aus auf Abstand gehaltenen, parallelen Glasscheiben (26, 27) aufgebaut ist, zwischen denen ein Brandschutzmittel (37) angeordnet ist, und wobei zwischen den über eine Stoßfuge (21) von mindestens 2 mm einander gegenüberliegenden Seitenkanten (16-19) der Brandschutz-Glasplatteneinheiten (11-13) eine feuerhemmende Isoliermaterialanordnung (42) eingebracht ist, **dadurch gekennzeichnet, dass** jede Brandschutz-Glasplatteneinheit (11-13) aus zwei nach Art einer Isolierglasscheibenanordnung mittels Abstandhalter (28) und einem PU-Randverbund (34) auf Abstand und aneinander gehaltenen ESG-Scheiben (26, 27) aufgebaut ist, deren Innenraum (36) mit einem Gel (37) als Brandschutzmittel ausgefüllt ist, und dass in einem Fugenbereich (21') zwischen denjenigen Randbereichen, die sich zwischen den beiden ESG-Scheiben (26, 27) befinden, als Isoliermaterialanordnung feuerhemmendes keramisches Isolierband (42) eingelegt und in Fugenbereiche (21") zwischen den ESG-Scheiben (26, 27) jeweils eine feuerhemmende Silikonmasse (43) eingebracht ist.

2. Brandschutzverglasung nach Anspruch 1, **dadurch gekennzeichnet, dass** das keramisches Isolierband (42) bis in jeweils einen Teilabschnitt der Fugenbereiche (21") zwischen den ESG-Scheiben (26, 27) ragt.

3. Brandschutzverglasung nach Anspruch 1 oder 2, **dadurch gekennzeichnet, dass** auf jeden PU-Randverbundbereich (34) zwischen den beiden ESG-Scheiben (26, 27) und gegebenenfalls jeweils einen Teilrandbereich der ESG-Scheiben (26, 27) ein keramisches Isolierband (42) aufgeklebt ist.

4. Brandschutzverglasung nach Anspruch 3, **dadurch gekennzeichnet, dass** die keramischen Isolierbänder (42) vor dem Aneinandersetzen zweier benachbarter Brandschutz-Glasplatteneinheiten (11-13) aufklebt sind.

5. Brandschutzverglasung nach Anspruch 3 oder 4, **dadurch gekennzeichnet, dass** das keramische Isolierband (42) eine Anfangsdicke von etwa 3 mm aufweist und mit dem Aneinandersetzen der Brandschutz-Glasplatteneinheiten (11-13) um etwa ein Drittel seiner Dicke zusammengedrückt ist.

6. Brandschutzverglasung nach mindestens einem der vorhergehenden Ansprüche, **dadurch gekennzeichnet, dass** die feuerhemmende Silikonmasse (43) nach dem Aneinandersetzen zweier benachbarter Brandschutz-Glasplatteneinheiten (11-13) in den verbleibenden Fugenbereich (21") zwischen den ESG-Scheiben (26, 27) eingespritzt ist.

7. Brandschutzverglasung nach mindestens einem der vorhergehenden Ansprüche, **dadurch gekennzeichnet, dass** die Außenflächen (47) der ESG-Scheiben (26, 27) von ihrer dem Randbereich benachbarten Kante ausgehend mit einem UV-undurchlässigen Abdeckstreifen (46) versehen ist.

8. Brandschutzverglasung nach Anspruch 7, **dadurch gekennzeichnet, dass** der UV-undurchlässige Abdeckstreifen (46) mittels Siebdruck aufgebracht ist.

9. Brandschutzverglasung nach Anspruch 7 oder 8, **dadurch gekennzeichnet, dass** der UV-undurchlässige Abdeckstreifen (46) etwa 15 bis 20 mm breit ist.
